**Europäisches Patentamt**

**European Patent Office**

**Office européen des brevets**

(19)

(11) Veröffentlichungsnummer : **0 352 517 B1**

(12)
# EUROPÄISCHE PATENTSCHRIFT

(45) Veröffentlichungstag der Patentschrift :
**11.11.92 Patentblatt 92/46**

(51) Int. Cl.$^5$ : **B65G 47/68**

(21) Anmeldenummer : **89112323.4**

(22) Anmeldetag : **06.07.89**

(54) Verfahren und Anordnung zum Umformen eines angeförderten einspurigen Behälterstromes in einen abzufördernden mehrspurigen Behälterstrom.

(30) Priorität : **08.07.88 DE 3823228**

(43) Veröffentlichungstag der Anmeldung :
**31.01.90 Patentblatt 90/05**

(45) Bekanntmachung des Hinweises auf die
Patenterteilung :
**11.11.92 Patentblatt 92/46**

(84) Benannte Vertragsstaaten :
**CH DE ES FR GB IT LI NL SE**

(56) Entgegenhaltungen :
**DE-A- 3 228 453**

(73) Patentinhaber : **Seitz Enzinger Noll
Maschinenbau Aktiengesellschaft
Neckarauer Strasse 140-162 Postfach 645
W-6800 Mannheim 1 (DE)**

(72) Erfinder : **Born, Gerhard
Don-Bosco-Strasse 16
W-6530 Bingen (Rhein) (DE)**

## Beschreibung

Die Erfindung bezieht sich auf ein Verfahren zum Umformen eines angeförderten, einspurigen Behälterstromes in einen abzufördernden, mehrspurigen Behälterstrom gemäß Oberbegriff Patentanspruch 1 sowie auf eine Anordnung zum Durchführen dieses Verfahrens gemäß Oberbegriff Patentanspruch 2 oder 20 und dabei speziell auf ein Verfahren sowie auf eine Anordnung zum Umformen eines einspurigen Flaschenstromes in einen mehrspurigen Flaschenstrom.

Bei einer bekannten Anordnung zum Umformen eines einspurigen Flaschenstroms in einen mehrspurigen Flaschenstrom (DE-OS 35 05 253) weist der Zwischenförderer zwei, jeweils von mehreren seitlich aneinander anschließenden Transportbändern gebildete Förderabschnitte auf, die auch ihrerseits seitlich, d.h. senkrecht zur Transport- oder Umlaufrichtung dieser Transportbänder aneinander anschließen. Der Eingang des Zwischenförderers ist dabei von einem auf der einen Seite des Zwischenförderers vorgesehenen Transportband des einen der beiden Förderabschnitte gebildet, während die auf der anderen, gegenüberliegenden Seite des Zwischenförderers vorgesehenen Transportbänder des anderen Förderabschnitts den Ausgang des Zwischenförderers dieser bekannten Anordnung bilden. Mit Hilfe von Führungsgeländern, die vom Eingang des Zwischenförderers zu dessen Ausgang hin einen zunehmenden Abstand aufweisen und dadurch einen sich vom Eingang zum Ausgang des Zwischenförderers erweiternden Durchgang für die Flaschen bilden, wird der angeförderte Flaschenstrom zur Erzielung des mehrspurigen abzufördernden Flaschenstroms diagonal, d.h. schräg zur Umlaufrichtung der Transportbänder über den von diesen Transportbändern gebildeten Zwischenförderer bewegt. Nachteilig ist bei dieser bekannten Anordnung u.a., daß die Flaschen beim Umformen in den mehrspurigen Flaschenstrom aneinander sowie am Führungsgeländer gleiten, d.h. dieses Umformen daher durch Einwirken von Staukräften erfolgt.

Aufgabe der Erfindung ist es, ein Verfahren sowie eine Anordnung aufzuzeigen, mit dem bzw. mit der das Umformen eines einspurigen Behälterstromes in einen mehrspurigen Behälterstrom ohne äußere Einwirkung durch Führungsgeländer oder dgl. Führungen für die Behälter erfolgt.

Zur Lösung dieser Aufgabe sind ein Verfahren entsprechend dem kennzeichnenden Teil des Patentanspruches 1 bzw. eine Anordnung entsprechend dem kennzeichnenden Teil des Patentanspruches 2 oder 20 ausgestaltet.

Bei dem erfindungsgemäßen Verfahren bzw. der erfindungsgemäßen Anordnung wird der angeförderte, einspurige Behälterstrom unter gleichmäßiger und allmählicher Verzögerung ohne äußere Einwirkung durch Führungsgeländer oder dgl. Führungen in den mehrspurigen, abzufördernden Behälterstrom umgeformt, wobei sich der angeförderte Behälterstrom sozusagen aus sich heraus quer zur Transport- bzw. Umlaufrichtung der Transportelemente, die Transportbänder oder Gruppen von Röllchen sind, ausbreitet, wobei die Behälter aneinander anliegen, so daß ein die Behälter besonders schonende, geräuscharme Umformung erzielt wird. Wesentlich ist bei der Erfindung u.a., daß die Umlauf- und Transportrichtung der Transportbänder gleich der Transportrichtung ist, in der die Behälter sich über den Zwischenförderer bzw. den dort gebildeten Umformbereich bewegen, und daß dementsprechend in dieser Transportrichtung die stufenförmige Reduzierung der Fördergeschwindigkeit der Behälter erfolgt.

Weiterbildungen der Erfindung sind Gegenstand der Unteransprüche.

Die Erfindung wird im folgenden anhand der Figuren an Ausführungsbeispielen näher erläutert. Es zeigen:

Fig. 1 in vereinfachter schematischer Darstellung und in Draufsicht eine erste Ausführungsform der erfindungsgemäßen Anordnung zum Umformen eines angeförderten, einspurigen Flaschenstromes in einen abzufördernden, mehrspurigen Flaschenstrom, zusammen mit mehreren, in dieser Anordnung befindlichen Flaschen;

Fig. 2 in ähnlicher Darstellung wie Fig. 1 den Anschlußbereich zwischen dem Zuförderer und dem Zwischenförderer bei einer abgewandelten Ausführungsform;

Fig. 3 in ähnlicher Darstellung wie Fig. 1 den Zuförderer sowie einen Teil des Zwischenförderers einer weiteren Ausführungsform der erfindungsgemäßen Anordnung;

Fig. 4 einen Schnitt entsprechend der Linie I-I der Fig. 1;

Fig. 5 einen Schnitt entsprechend der Linie II-II der Fig. 1;

Fig. 6 einen Schnitt entsprechend der Linie III-III der Fig. 1;

Fig. 7 den Anschlußbereich der Anordnung gemäß Fig. 2 im Schnitt entsprechend der Linie IV-IV, zusammen mit einer Flasche.

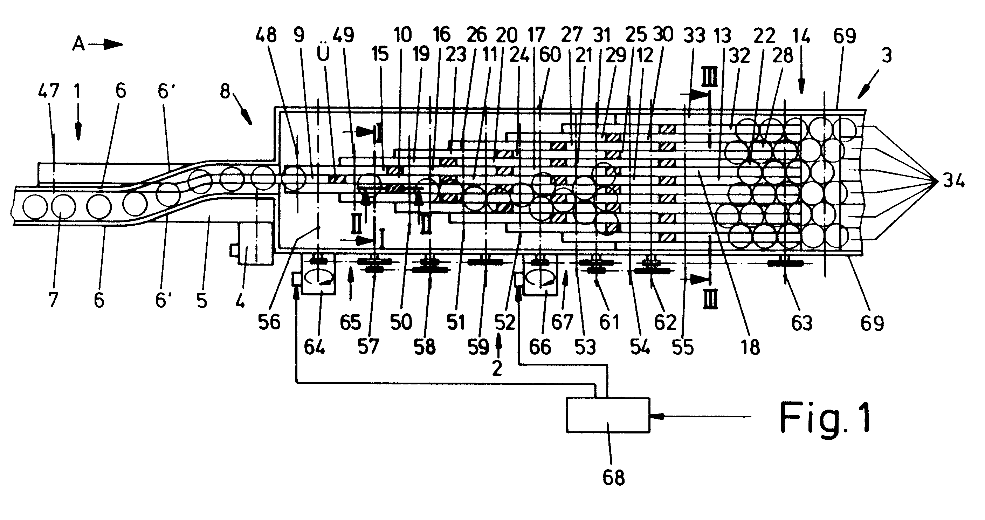

Die in der Fig. 1 dargestellte Vorrichtung zum Umformen eines angeförderten, einspurigen Flaschenstromes in einen abgeführten mehrspurigen, d.h. bei der dargestellten Ausführung sechsspurigen Flaschenstrom besteht im wesentlichen aus dem Zuförderer 1 zum Zuführen des einspurigen Flaschenstromes, aus dem Zwischenförderer 2, der den Umformbereich zum Umformen des einspurigen Flaschenstromes in den mehrspurigen Flaschenstrom bildet, sowie aus dem Abförderer 3 zum Abführen des mehrspurigen Flaschenstromes.

Bei der in der Fig. 1 dargestellten Ausführungsform ist der Zuförderer 1 im wesentlichen von einem in sich geschlossenen und von einem Antrieb 4 (z.B. Antriebsmotor) endlos umlaufend angetriebenen Transportband 5 sowie von zwei die Spur- bzw. Förderbreite des Zuförderers 1 seitlich begrenzenden Führungsgeländern 6 gebildet. Der Abstand der beiden Führungsgeländer und damit die Spur- bzw. Förderbreite des Zuförderers 1 sind so gewählt, daß die Flaschen 7 der Anordnung von einer nicht näher dargestellten Flaschenbehandlungsmaschine (z.B. Etikettiermaschine usw.) über den Zuförderer 1 in Richtung des Pfeiles A als einspuriger Flaschenstrom zugeführt werden, in welchem die aufrecht stehenden, d.h. mit ihrem Boden 7' auf dem Transportband 5 aufstehenden Flaschen in Transportrichtung A aufeinander folgend vorgesehen sind. Am Anschlußbereich 8 zwischen dem Zuförderer 1 und dem Zwischenförderer 2 weisen die beiden Führungsgeländer 6 bei 6' jeweils einen S-förmigen Verlauf derart auf, daß die Flaschen 7 dort zunehmend seitlich von dem Transportband 5 auf ein kurvengängiges Transportband 9 aufgeschoben und dann mit diesem wiederum in Transportrichtung A dem Zwischenförderer 2 zugeführt werden. Das Transportband 9, welches bereits Teil des Zwischenförderers 2 ist und sich entgegen der Transportrichtung A über den Eingang des Zwischenförderers 2 bzw. den Anschlußbereich 8 erstreckt, weist im Anschlußbereich 8 dem dortigen Verlauf der Führungsgeländer 6 entsprechend einen S-förmigen Verlauf derart auf, daß sich dieses Transportband 9 dem Transportband 5 annähert und mit dem in Transportrichtung A vorderen Ende (in Transportrichtung A noch vor dem Anschlußbereich 8) einer Längsseite des Transportbandes 5 unmittelbar benachbart liegt.

Am Zwischenförderer 2 schließen sich (jeweils über einen Übergang Ü) in Transportrichtung A an das Transportband 9 ein Transportband 10, an das Transportband 10 ein Transportband 11, an das Transportband 11 ein Transportband 12 und an das Transportband 12 ein Transportband 13 an. Diese vorgenannten Transportbänder bilden einen ersten Förderabschnitt des Zwischenförderers 2, der (Förderabschnitt) sich bei der Ausführung nach Fig. 1 in der in Transportrichtung A verlaufenden Mittellinie des Zwischenförderers 2 und des Abförderers 3 erstreckt, und zwar vom Anschlußbereich 8 bzw. vom Eingang des Zwischenförderers 2 bis zu dessen Ausgang 14, an welchem sich der Abförderer 3 an den Zwischenförderer 2 anschließt. Die Übergänge Ü auch der nachfolgend noch beschriebenen Förderabschnitte sind in der Fig. 1 zur besseren Hervorhebung schraffiert.

Spiegelbildlich zu dieser vorgenannten Mittellinie sind beidseitig von dem von den Transportbänder 9 - 13 gebildeten ersten Förderabschnitt am Zwischenförderer 2 weitere Förderabschnitte vorgesehen, und zwar bei der dargestellten Ausführungsform auf jeder Seite des von den Transportbändern 9 - 13 gebildeten ersten Förderabschnittes die folgenden weiteren, ebenfalls von Transportbändern gebildeten und bis an den Ausgang 14 reichenden Förderabschnitte:

1. Unmittelbar an den von den Transportbändern 9 - 13 gebildeten ersten Förderabschnitt seitlich, d.h. senkrecht zur Transportrichtung A anschließend ein zweiter, von den Transportbändern 15 - 18 gebildeter Förderabschnitt, bei dem die Transportbänder 15 - 18 mit einer Längsseite jeweils den Transportbändern 9 -13 des ersten Förderabschnittes unmittelbar benachbart liegen und bei dem (zweiter Förderabschnitt) in Transportrichtung A an das Transportband 15 das Transportband 16, an das Transportband 16 das Transportband 17 und an das Transportband 17 das Transportband 18 anschließen, welch letzteres (ebenso wie das Transportband 13) bis an den Ausgang 14 des Zwischenförderers 2 reicht.

Die Transportbänder 15 - 18 dieses zweiten Förderabschnittes besitzen eine solche Länge und sind in bezug auf die Transportbänder 9 - 13 des benachbarten ersten Förderabschnittes in Transportrichtung A so versetzt, daß das mit seinem (bezogen auf die Transportrichtung A) vorderen Ende bis in die Nähe des Eingangs des Zwischenförderers reichende Transportband 15 mit seinem (ebenfalls bezogen auf die Transportrichtung A) hinteren Ende in dieser Transportrichtung A hinter dem Übergang Ü zwischen den Transportbändern 9 und 10 liegt und somit diesen Übergang Ü zwischen den Transportbändern 9 und 10 überlappt. In ähnlicher Weise überlappen das Transportband 16 den Übergang Ü zwischen den Transportbändern 10 und 11, das Transportband 17 den Übergang Ü zwischen den Transportbändern 11 und 12 und das Transportband 18 den Übergang Ü zwischen den Transportbändern 12 und 13.

2. Unmittelbar an den von den Transportbändern 15 - 18 gebildeten zweiten Förderabschnitt seitlich anschließend ein von den Transportbändern 19 - 22 gebildeter dritter Förderabschnitt, bei dem die Transportbänder 19 - 22 mit einer Längsseite jeweils den Transportbändern 15 -18 des zweiten Förderabschnittes unmittelbar benachbart liegen und bei dem in Transportrichtung A an das Transportband 19 das Transportband 20, an das Transportband 20 das Transportband 21 und an das Transportband 21 das Transportband 22 anschließen, welch letzteres bis an den Ausgang 14 des Zwischenförderers 2 reicht.

Die Transportbänder 19 - 22 dieses dritten Förderabschnittes besitzen eine solche Länge und sind in bezug auf die Transportbänder 15 - 18 des benachbarten zweiten Förderabschnittes so versetzt, daß das mit seinem (bezogen auf die Transportrichtung A) vorderen Ende bis etwa in die Mitte des benachbarten Transportbandes 15 reichende Transportband 19 mit seinem (ebenfalls bezogen auf die Transportrichtung A) hinteren Ende in Transportrichtung A hinter dem Übergang Ü zwischen den Transportbändern 15 und 16, etwa in der Mitte des Transportbandes 16 liegt und somit den Übergang Ü zwischen den Transportbändern 15 und 16 überlappt. In ähnlicher Weise überlappen das Transportband 20 den Übergang Ü zwischen den Transportbändern 16 und 17, das Transportband 21 den Übergang Ü zwischen den Transportbändern 17 und 18, während der Übergang zwischen den Transportbändern 21 und 22 von dem mit seinem vorderen Ende etwa im Bereich der Mitte des Transportbandes 21 liegenden Transportband 18 überlappt ist.

3. Unmittelbar an den von den Transportbändern 19 - 22 gebildeten dritten Förderabschnitt seitlich anschließend ein vierter, von den Transportbändern 23 -25 gebildeter Förderabschnitt, bei dem die Transportbänder 23 - 25 mit einer Längsseite jeweils den Transportbändern 19 - 22 des dritten Förderabschnittes unmittelbar benachbart liegen und bei dem in Transportrichtung A an das Transportband 23 das Transportband 24 und an das Transportband 24 das Transportband 25 anschließen, welch letzteres bis an den Ausgang 14 des Zwischenförderers 2 reicht.

Die Transportbänder 23 - 25 dieses vierten Förderabschnittes besitzen eine solche Länge und sind in bezug auf die Transportbänder 19 - 22 des benachbarten dritten Förderabschnittes in Transportrichtung A so versetzt, daß das mit seinem (bezogen auf die Transportrichtung A) vorderen Ende bis etwa in die Mitte des Transportbandes 19 reichende Transportband 23 mit seinem (ebenfalls bezogen auf die Transportrichtung A) hinteren Ende in dieser Transportrichtung A hinter dem Übergang Ü zwischen den Transportbändern 19 und 20 liegt und somit diesen Übergang Ü zwischen den Transportbändern 19 und 20 überlappt. In ähnlicher Weise überlappen das Transportband 24 den Übergang Ü zwischen den Transportbändern 20 und 21 und das Transportband 25 den Übergang Ü zwischen den Transportbändern 21 und 22.

4. Unmittelbar an den von den Transportbändern 23 - 25 gebildeten vierten Förderabschnitt seitlich anschließend einen fünften, von den Transportbändern 26 - 28 gebildeten Förderabschnitt, bei dem die Transportbänder 26 - 28 mit einer Längsseite jeweils den Transportbändern 23 - 25 des vierten Förderabschnittes unmittelbar benachbart liegen und bei dem in Transportrichtung A an das Transportband 26 das Transportband 27 und an das Transportband 27 das Transportband 28 anschließen, welch letzteres wieder bis an den Ausgang 14 des Zwischenförderers 2 reicht.

Die Transportbänder 26 - 28 dieses fünften Förderabschnittes besitzen eine solche Länge und sind in bezug auf die Transportbänder 23 - 25 des vierten Förderabschnittes in Transportrichtung A so versetzt, daß das mit seinem (bezogen auf die Transportrichtung A) vorderen Ende bis etwa in die Mitte des Transportbandes 23 reichende Transportband 26 mit seinem (ebenfalls bezogen auf die Transportrichtung A) hinteren Ende in dieser Transportrichtung A hinter dem Übergang Ü zwischen den Transportbändern 23 und 24 liegt, und zwar etwa in der Mitte des Transportbandes 24 und somit den Übergang Ü zwischen den Transportbändern 23 und 24 überlappt. In ähnlicher Weise überlappt das Transportband 27 den Übergang Ü zwischen den Transportbändern 24 und 25, während der Übergang Ü zwischen den Transportbändern 27 und 28 von dem bis etwa in die Mitte des Transportbandes 27 reichenden Transportband 25 überlappt ist.

5. Unmittelbar an den von den Transportbändern 26 - 28 gebildeten fünften Förderabschnitt seitlich anschließend ein sechster, von den Transportbändern 29 und 30 gebildeter Förderabschnitt, bei dem die Transportbänder 29 und 30 mit einer Längsseite jeweils den Transportbändern 26 - 28 des fünften Förderabschnittes unmittelbar benachbart liegen und bei dem in Transportrichtung A an das Transportband 29 das Transportband 30 anschließt, welch letzteres bis an den Ausgang 14 des Zwischenförderers 2 reicht.

Die Transportbänder 29 und 30 dieses sechsten Förderabschnittes besitzen wiederum eine solche Länge und sind in bezug auf die Transportbänder 26 - 28 des fünften Förderabschnittes in Transportrichtung A so versetzt, daß das mit seinem (bezogen auf die Transportrichtung A) vorderen Ende bis etwa in die Mitte des Transportbandes 26 reichende Transportband 29 mit seinem (ebenfalls bezogen auf die Transportrichtung A) hinteren Ende in dieser Transportrichtung A hinter dem Übergang Ü zwischen den Transportbändern 26 und 27 liegt, und zwar etwa in der Mitte des Transportbandes 27 und somit den Übergang Ü zwischen den Transportbändern 26 und 27 überlappt. In ähnlicher Weise überlappt das Transportband 30 den Übergang zwischen den Transportbändern 27 und 28.

6. Unmittelbar an den von den Transportbändern 29 und 30 gebildeten sechsten Förderabschnitt seitlich anschließend ein von den Transportbändern 31 und 32 gebildeter siebter Förderabschnitt, bei dem die Transportbänder 31 und 32 mit einer Längsseite jeweils den Transportbändern 29 und 30 des sechsten Förderabschnittes unmittelbar benachbart liegen und bei dem in Transportrichtung A an das Transportband 31 das Transportband 32 anschließt, welch letzteres wieder bis an den Ausgang 14 des Zwischenförderers 2 reicht.

Die Transportbänder 31 und 32 dieses siebten Förderabschnittes besitzen eine solche Länge und sind in bezug auf die Transportbänder 29 und 30 des sechsten Förderabschnittes in Transportrichtung A so versetzt, daß das mit seinem (bezogen auf die Transportrichtung A) vorderen Ende bis etwa in die Mitte des Transportbandes 29 reichende Transportband 31 mit seinem (ebenfalls bezogen auf die Transportrichtung A) hinteren Ende in dieser Transportrichtung A hinter dem Übergang Ü zwischen den Transportbändern 29 und 30 liegt, und zwar um einen Betrag, der etwa der halben Länge des Transportbandes 31 entspricht, und somit diesen Übergang Ü zwischen den Transportbändern 29 und 30 überlappt. Der Übergang zwischen den Transportbändern 31 und 32 ist von dem Transportband 30 überlappt.

7. Unmittelbar an dem von den Transportbändern 31 und 32 gebildeten siebten Förderabschnitt seitlich anschließend ein achter, von dem Transportband 33 gebildeter Förderabschnitt, bei dem das (ebenso wie die Transportbänder 9 - 13, 15 - 18, 19 - 22, 23 - 25, 26 -28, 29, 30, 31 und 32) in Transportrichtung A liegende Transportband 33 mit einer Längsseite den Transportbändern 31 und 32 unmittelbar benachbart ist und bis an den Ausgang 14 des Zwischenförderers 2 reicht.

Das Transportband 33 dieses achten Förderabschnittes besitzt eine solche Länge und ist in bezug auf die Transportbänder 31 und 32 des siebten Förderabschnittes so versetzt, daß das mit seinem (bezogen auf die Transportrichtung A) vorderen Ende bis etwa in die Mitte des Transportbandes 31 reichende Transportband 33 mit seinem (ebenfalls bezogen auf die Transportrichtung A) hinteren Ende in Transportrichtung A bis an den Ausgang 14 des Zwischenförderers 2 reicht und dabei den Übergang Ü zwischen den Transportbändern 31 und 32 überlappt.

Wie vorstehend beschrieben, weist somit der Zwischenförderer 2 beidseitig von dem von den Transportbändern 9 -13 gebildeten ersten Förderabschnitt jeweils sieben weitere Förderabschnitte (zweiter bis achter Förderabschnitt) auf, von denen der bezogen auf den mittleren ersten Förderabschnitt (Transportbänder 9 - 13) jeweils am weitesten außen liegende achte Förderabschnitt lediglich ein einziges Transportband 33, die sich hieran jeweils nach innen anschließenden beiden weiteren sechsten und siebten Förderabschnitte zwei Transportbänder, nämlich die Transportbänder 29 und 30 bzw. 31 und 32, die beiden sich hieran weiter nach innen anschließenden vierten und fünften Förderabschnitte jeweils drei Transportbänder, nämlich die Transportbänder 23 - 25 bzw. 26 - 28 und die beiden sich hieran weiter nach innen anschließenden zweiten und dritten Förderabschnitte jeweils vier Transportbänder, nämlich die Transportbänder 15 - 18 bzw. 19 - 22 aufweisen, während der mittlere, erste Förderabschnitt insgesamt fünf Transportbänder, nämlich die Transportbänder 9 - 13 besitzt. Bei der dargestellten Ausführungsform weisen somit zwischen dem äußeren achten Förderabschnitt (Transportband 33) und dem inneren ersten Förderabschnitt (Transportbänder 9 - 13) zwei senkrecht zur Transportrichtung A aneinander anschließende Förderabschnitte jeweils die gleiche Anzahl von Transportbändern auf, wobei sich die Anzahl der Transportbänder bei jedem zweiten, in Richtung senkrecht zur Transportrichtung A folgenden Förderabschnitt um Eins erhöht.

Die Transportbänder 9 - 13, 15 - 18, 19 - 22, 23 - 25, 26 -28, 29, 30, 31, 32 und 33 sind ebenso wie das Transportband 5 des Zuförderers 1 und die bei der dargestellten Ausführungsform insgesamt sechs senkrecht zur Transportrichtung A aneinander anschließenden, den Abförderer 3 bildenden Transportbänder 34 endlos umlaufend angetrieben und von Scharnierbandketten gebildet, wobei die Transportbänder 9 -13, 15 - 18, 19 - 22, 23 - 25, 26 - 28, 29, 30, 31 und 33 jeweils senkrecht zur Transportrichtung A eine Breite aufweisen, die wesentlich kleiner ist als der Durchmesser des Bodens 7′ der Flaschen 7 und bei der dargestellten Ausführungsform etwa einem Drittel der Breite der Transportbänder 5 und 34 entspricht, deren Breite gleich oder annähernd gleich dem Durchmesser des Bodens 7′ der Flaschen 7 ist.

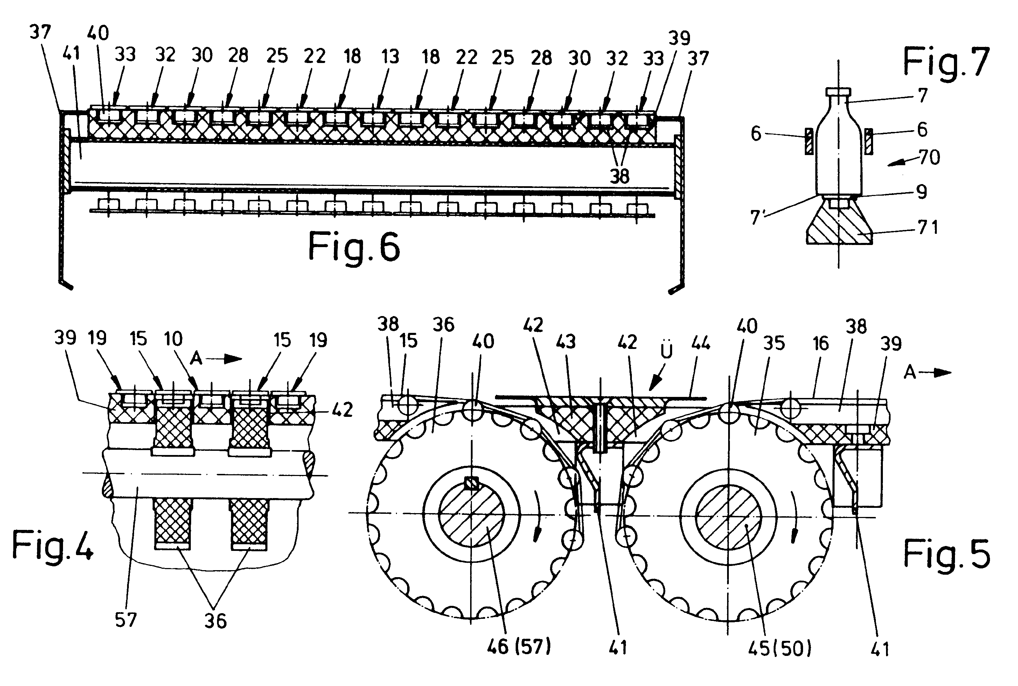

Die Transportbänder 9 - 13, 15 - 18, 19 - 22, 23 - 25, 26 -28, 29, 30, 31 und 33 sind an ihrem vorderen und an ihrem hinteren Ende jeweils über Umlenkräder bzw. -rollen 35 bzw. 36 geführt (Fig. 5) und mit ihren oberen, sich in Transportrichtung A bewegenden Längen in an einem Vorrichtungsgestell oder -rahmen vorgesehenen Führungen derart geführt, daß diese Transportbänder mit ihren oberen Längen eine ebene, horizontale Standfläche für die Böden 7′ der Flaschen 7 bilden, an die (Standfläche) sich am Ausgang 14 dann die ebenfalls ebene und horizontale, von den oberen Längen der Transportbänder 34 gebildete Standfläche des Abförderers 3 niveaugleich anschließt.

Bei der dargestellten Ausführungsform sind diese vorgenannten Führungen für die oberen Längen der Transportbänder des Zwischenförderers 2 von einer Vielzahl von Nuten 38 gebildet, die an der in einer horizontalen Ebene liegenden Oberseite einer sich über die gesamte Länge sowie die gesamte Breite des Zwischenförderers 2 erstreckenden Platte 39 aus Kunststoff eingebracht bzw. vorgesehen sind, wobei sich diese Nuten 38 parallel zueinander und im Abstand voneinander in Transportrichtung erstrecken. Die den Zwischenförderer bildenden Transportbänder 9 - 13, 15 - 18, 19 - 22, 23 - 25, 26 - 28, 29, 30, 31, 32 und 33 reichen jeweils von oben her in die dort offenen Nuten 38 mit den die Gelenkverbindung zwischen den einzelnen Gliedern dieser Transportbänder bildenden Abschnitten 40 hinein und liegen ansonsten mit dem plattenförmigen Teil ihrer einzelnen Glieder auf der Oberseite der Platte 39 beidseitig von jeweils einer Nut 38 auf. Hierdurch ist in besonders einfacher Weise sichergestellt, daß die den Zwischenförderer 2 bildenden Transportbänder mit ihren jeweils oberen Längen exakt in einer gemeinsamen, horizontalen Ebene liegen und somit eine vollständig ebene Standfläche für die Flaschen 7 bilden.

Die Platte 39 ist mit ihrer Unterseite auf mehreren, sich in horizontaler Richtung und senkrecht zur Transportrichtung A erstreckenden Traversen 41 aufliegend an diesen und damit am Vorrichtungsgestell 37 befestigt. Am Anfang sowie am Ende der einzelnen, den Zwischenförderer bildenden Transportbändern, d.h. dort, wo diese Transportbänder jeweils über die Umlenkrollen 35 bzw. 36 geführt sind, sind entsprechend der Fig. 5 in die Platte 39 durchgehende Öffnungen 42 eingebracht bzw. eingefräst, deren Breite in Richtung senkrecht zur Transportrichtung A gleich oder geringfügig größer ist als die Breite der den Zwischenförderer 2 bildenden Transportbänder.

Weiterhin ist die Anordnung bzw. Verteilung der Traversen 41 so gewählt, daß sich auch an jedem Übergang Ü zwischen zwei in Transportrichtung A aneinander anschließenden Transportbändern des Zwischenförderers 2, also auch an dem in der Fig. 5 speziell dargestellten Übergang Ü zwischen den Transportbändern 15 und 16 bzw. zwischen den dortigen Umlenkrädern 35 und 36 eine Traverse 41 befindet, auf der dann über ein Abstandselement 43 ein den Übergang Ü überbrückendes Gleitblech 44 für die Böden 7' der Flaschen 7 vorgesehen ist. Jedes Gleitblech 44 liegt dabei mit seiner Oberseite im wesentlichen niveaugleich mit der von den oberen Längen der Transportbänder des Zwischenförderers 2 gebildeten Ebene bzw. Standfläche. Die Öffnungen 42 für die Umlenkräder 35 bzw. 36 können in die Platte 39 auch so eingebracht sein, daß die Abstandselemente 43 von bei diesem Einbringen der Öffnungen 42 verbliebenen Materialstegen der Platte 39 gebildet sind.

Die die vorderen Enden der Transportbänder des Zwischenförderers 2 bildenden Umlenkrollen 35 sind jeweils auf Wellen 45 um eine horizontale, senkrecht zur Transportrichtung A verlaufende Achse frei drehbar am Vorrichtungsgestell 37 gelagert. Die die hinteren Enden der Transportbänder des Zwischenförderers 2 bildenden Umlenkrollen 36 sind jeweils antriebsmäßig mit Wellen 46 verbunden, die mit ihren Achsen ebenfalls in horizontaler Richtung und senkrecht zur Transportrichtung A verlaufend am Vorrichtungsgestell 37 gelagert und in einer weiter unten noch näher beschriebenen Weise umlaufend angetrieben sind.

In der Fig. 1 sind die Achsen für die vorderen Enden der Transportbänder des Zwischenförderers 2, d.h. für die dortigen Wellen 45 bzw. Umlenkräder 35 mit 47 - 55 bezeichnet, wobei diese Achsen, wie folgt, angeordnet und den einzelnen Transportbändern zugeordnet sind:

Achse 47:

Diese Achse bestimmt das vordere Ende des Transportbandes 9 und liegt am Ende des Zuförderers 1 in Transportrichtung A vor dem Anschlußbereich 8 bzw. vor demjenigen Bereich, an welchem die Führungsgeländer 6 den S-förmigen Verlauf 6' besitzen.

Achse 48:

Diese Achse bestimmt das vordere Ende der Transportbänder 15 der beiden zweiten Förderabschnitte und liegt in Transportrichtung A auf den Eingang des Zwischenförderers 2 folgend vor dem Übergang Ü zwischen den Transportbändern 9 und 10.

Achse 49:

Diese in Transportrichtung A auf die Achse 48 folgende Achse 49 bestimmt das vordere Ende des Transportbandes 10 des ersten Förderabschnittes sowie der Transportbänder 19 der beiden dritten Förderabschnitte und liegt in Transportrichtung A auf den Übergang Ü zwischen den Transportbändern 9 und 10 folgend vor dem Übergang Ü zwischen den Transportbändern 15 und 16 der beiden zweiten Förderabschnitte.

Achse 50:

Diese in Transportrichtung A auf die Achse 49 folgende Achse 50 bestimmt das vordere Ende der Transportbänder 16 der beiden zweiten Förderabschnitte sowie das vordere Ende der Transportbänder 23 der beiden vierten Förderabschnitte und liegt in Transportrichtung A auf den Übergang zwischen den Transportbändern 15 und 16 folgend vor dem Übergang Ü der Transportbänder 10 und 11 und 19 und 20.

Achse 51:

Diese in Transportrichtung A auf die Achse 50 folgende Achse 51 bestimmt das vordere Ende des Transportbandes 11, der Transportbänder 20 der beiden dritten Förderabschnitte sowie der Transportbänder 26 der beiden fünften Förderabschnitte und liegt in Transportrichtung A auf die drei Übergänge zwischen den Transportbändern 10 und 11 bzw. zwischen den Transportbändern 19 und 20 folgend vor den vier Übergängen Ü zwischen den Transportbändern 16 und 17 bzw. 23 und 24.

Achse 52:

Diese in Transportrichtung A auf die Achse 51 folgende Achse 52 bestimmt das vordere Ende der Transportbänder 17 der beiden zweiten Förderabschnitte sowie der Transportbänder 24 der beiden vierten Förderabschnitte und liegt in Transportrichtung A auf die vier Übergänge Ü zwischen den Transportbändern 16 und 17 bzw. zwischen den Transportbändern 23 und 24 folgend vor den fünf Übergängen Ü zwischen den Transportbändern 11 und 12, 20 und 21 bzw. 26 und 27.

Achse 53:

Diese in Transportrichtung A auf die Achse 52 folgende Achse bestimmt das vordere Ende des Transportbandes 12 des ersten Förderabschnittes, das vordere Ende der Transportbänder 21 der beiden dritten Förderabschnitte, das vordere Ende der Transportbänder 27 der beiden fünften Förderabschnitte sowie das vordere Ende der Transportbänder 31 der beiden siebten Förderabschnitte und liegt in Transportrichtung A auf die fünf Übergänge Ü zwischen den Transportbändern 11 und 12, 20 und 21 und 26 und 27 folgend vor den insgesamt sechs Übergängen Ü zwischen den Transportbändern 17 und 18, 24 und 25 bzw. 29 und 30.

Achse 54:

Diese in Transportrichtung A auf die Achse 53 folgende Achse 54 bestimmt das vordere Ende der Transportbänder 18 der beiden zweiten Förderabschnitte, das vordere Ende der Transportbänder 25 der beiden vierten Förderabschnitte, das vordere Ende der Transportbänder 30 der beiden sechsten Förderabschnitte sowie das vordere Ende der Transportbänder 33 der beiden achten Förderabschnitte und liegt in Transportrichtung A auf die Übergänge Ü zwischen den Transportbändern 17 und 18, 24 und 25 bzw. 29 und 30 folgend, vor den insgesamt sieben Übergängen Ü zwischen den Transportbändern 12 und 13, 21 und 22, 27 und 28 bzw. 31 und 32.

Achse 55:

Diese in Transportrichtung A auf die Achse 54 folgende Achse 55 bestimmt das vordere Ende des Transportbandes 13 des ersten Förderabschnittes, das vordere Ende der Transportbänder 22 der beiden dritten Förderabschnitte, das vordere Ende der Transportbänder 28 der beiden fünften Förderabschnitte sowie das vordere Ende der Transportbänder 32 der beiden siebten Förderabschnitte und liegt in Transportrichtung A hinter den Übergängen Ü zwischen den Transportbändern 12 und 13, 21 und 22, 27 und 28 bzw. 31 und 32.

Die den hinteren Enden der Transportbänder des Zwischenförderers bzw. den Wellen 46 entsprechenden angetriebenen Achsen sind in der Fig. 1 mit 56 - 63 bezeichnet, wobei hier folgende An- und Zuordnung gilt:

Achse 56:

Diese Achse 56 bestimmt das hintere Ende des Transportbandes 9 und liegt in Transportrichtung A auf die Achse 48 folgend vor der Achse 49.

Achse 57:

Diese in Transportrichtung auf die Achse 56 folgende Achse 57 bestimmt das hintere Ende der Transportbänder 15 der beiden zweiten Förderabschnitte und liegt in Transportrichtung A auf die Achse 49 folgend vor der Achse 50.

Achse 58:

Diese in Transportrichtung A auf die Achse 57 folgende Achse 58 bestimmt das hintere Ende des Transportbandes 10 des ersten Förderabschnittes und das hintere Ende der Transportbänder 19 der beiden dritten Förderabschnitte und liegt in Transportrichtung A auf die Achse 50 folgend vor der Achse 51.

Achse 59:

Diese in Transportrichtung A auf die Achse 58 folgende Achse 59 bestimmt das hintere Ende der Transportbänder 16 der beiden zweiten Förderabschnitte sowie das hintere Ende der Transportbänder 23 der beiden vierten Förderabschnitte und liegt in Transportrichtung A auf die Achse 51 folgend vor der Achse 52.

Achse 60:

Diese in Transportrichtung A auf die Achse 59 folgende Achse 60 bestimmt das hintere Ende des Transportbandes 11 des ersten Förderabschnittes, das hintere Ende der Transportbänder 20 der beiden dritten Förderabschnitte sowie das hintere Ende der Transportbänder 26 der beiden fünften Förderabschnitte und liegt in Transportrichtung A auf die Achse 52 folgend vor der Achse 53.

Achse 61:

Diese in Transportrichtung A auf die Achse 60 folgende Achse 61 bestimmt das hintere Ende der Transportbänder 17 der beiden zweiten Förderabschnitte, das hintere Ende der Transportbänder 24 der beiden vierten Förderabschnitte sowie das hintere Ende der Transportbänder 29 der beiden sechsten Förderabschnitte und liegt in Transportrichtung A auf die Achse 53 folgend vor der Achse 54.

Achse 62:

Diese in Transportrichtung A auf die Achse 61 folgende Achse 62 bestimmt das hintere Ende des Transportbandes 12 des ersten Förderabschnittes, das hintere Ende der Transportbänder 21 der beiden dritten Förderabschnitte, das hintere Ende der Transportbänder 27 der beiden fünften Förderabschnitte sowie das hintere Ende der Transportbänder 31 der beiden siebten Förderabschnitte und liegt in Transportrichtung A auf die Achse 44 folgend vor der Achse 55.

Achse 63:

Diese in Transportrichtung A auf die Achse 62 folgende Achse 63 befindet sich im Bereich des Ausgangs 14 des Zwischenförderers 2 und bestimmt damit das dortige, hintere Ende der Transportbänder 13, 18, 22, 25, 28, 30, 32 und 33 sämtlicher Förderabschnitte.

Wie die Fig. 1 weiterhin zeigt, weisen mit Ausnahme des Transportbandes 9 alle nicht bis an den Ausgang reichende Transportbänder 10 - 12, 15 - 17, 19 - 21, 23, 24, 26, 27, 29 und 31 bei der dargestellten Ausführungsform die gleiche Länge auf. Von den bis an den Ausgang reichenden Transportbändern 13, 18, 22, 25, 28, 30, 32 und 33 besitzen die Transportbänder 13, 22, 28 und 32 jeweils eine gleiche, erste Länge, die bei der dargestellten Ausführungsform der Länge der vorgenannten, nicht bis an den Ausgang 14 reichenden Transportbändern entspricht, und die Transportbänder 18, 25, 30 und 33 ebenfalls eine gleiche zweite Länge, die jedoch um die halbe Länge der nicht bis an den Ausgang 14 reichenden Transportbänder 10 - 12, 15 - 17, 19 - 21, 23, 24, 26, 27, 29 und 31 größer ist als die vorgenannte erste Länge. Hierdurch sowie durch das in Transportrichtung A aneinander Anschliessen der Transportbänder in den einzelnen Förderabschnitten, ergibt sich das oben beschriebene Überlappen der Übergänge Ü durch jeweils seitlich anschließende Transportbänder bzw. der oben beschriebene Versatz der den Zwischenförderer 2 bildenden Transportbänder.

Wie die Fig. 1 weiterhin zeigt, ist die Achse 56 durch einen in seiner Drehzahl regelbaren Elektromotor 64 angetrieben. Der Antrieb der Achsen 57 - 59 erfolgt von der Achse 56 und dann von Achse zu Achse jeweils über ein Untersetzungsgetriebe 65, so daß in gleicher Weise, wie die Achsen 56 - 59 in Transportrichtung A aufeinander folgen, auch deren Drehgeschwindigkeit abnimmt.

In gleicher Weise ist die Achse 60 durch einen zweiten, in seiner Geschwindigkeit regelbaren Elektromotor 66 angetrieben, wobei der Antrieb der Achsen 61 - 63 von der Achse 60 und dann von Achse zu Achse über ein Untersetzungsgetriebe 67 erfolgt. In gleicher Weise wie die Achsen 60 - 63 in Transportrichtung A aufeinander folgen, nehmen somit auch deren Drehgeschwindigkeiten stufenförmig ab. Im praktischen Einsatz werden die beiden Elektromotoren 64 und 66 durch eine Steuereinrichtung 68 in Abhängigkeit von der Durchsatzleistung einer sich an den Abförderer 3 anschließenden Behandlungsmaschine (z.B. Etikettiermaschine, Einpacker usw.) gesteuert, und zwar insbesondere auch derart, daß die Transportgeschwindigkeit der bis an den Ausgang 14 reichenden Transportbänder des Zwischenförderers 2 gleich der Fördergeschwindigkeit des Abförderers 3 ist. Die normale Drehzahl des Elektromotors 66 ist weiterhin so gewählt, daß auch die Achse 60 eine kleinere Geschwindigkeit als die Achse 59 besitzt, so daß in gleicher Weise wie die Achsen 56 - 63 in Transportrichtung A aufeinander folgen die Geschwindigkeit sämtlicher Achsen 56 - 63 stufenförmig abnimmt.

Durch die beschriebene Zuordnung der Achsen 56 - 63 zu den einzelnen Transportbändern des Zwischenförderers wird erreicht, daß an jedem Übergang Ü zwischen den Transportbändern des Zwischenförderers 2 die Differenz der Transportgeschwindigkeiten zwischen einem vorausgehenden und einem sich in Transportrichtung A anschließenden Transportband größer ist als die Differenz der Transportgeschwindigkeiten zwischen diesem vorausgehenden Transportband und einem den Übergang Ü überlappenden Transportband eines benachbarten Förderabschnittes. Bei der dargestellten Ausführung sind die Transportgeschwindigkeiten so gewählt, daß die Differenz der Transportgeschwindigkeiten zweier senkrecht zur Transportrichtung A benachbarter Transportbänder 10 Meter/Min. beträgt.

Durch die beschriebene Ausbildung, bei der die Flaschen 7 mit ihrem Boden 7' infolge der geringen Breite der den Zwischenförderer 2 bildenden Transportbänder stets auf mehreren Transportbändern gleichzeitig aufstehen, wird eine gleichmäßige und allmähliche Verzögerung des über den Zuförderer 1 zugeführten Flaschenstroms erreicht. Dieser wird nicht durch äußere Kräfte, wie z.B. Geländer usw. abgelenkt, sondern der angeförderte Flaschenstrom quillt zunehmend aus sich selbst heraus in die Breite (quer zur Transportrichtung A). Auch ein Aneinanderstoßen der Flaschen 7 beim Umformen des einspurigen Flaschenstromes in den sechsspurigen Flaschenstrom erfolgt stets mit geringer Differenzgeschwindigkeit, wobei durch die geringe Breite der den Zwischenförderer 2 bildenden Transportbänder sowie durch deren Versatz bzw. durch den Versatz der Übergänge Ü auch vermieden ist, daß die Gleitbleche 44 stauerzeugend wirken können.

Wie die Fig. 1 zeigt, weist der Abförderer 3, dessen Spurbreite der Spurbreite des Zwischenförderers 2 am Ausgang 14 entspricht, zwei seitliche Führungsgeländer 69 auf, die sich auch bis an den Eingang des Zwischenförderers 2 erstrecken und dort in die Führungsgeländer 6 übergehen.

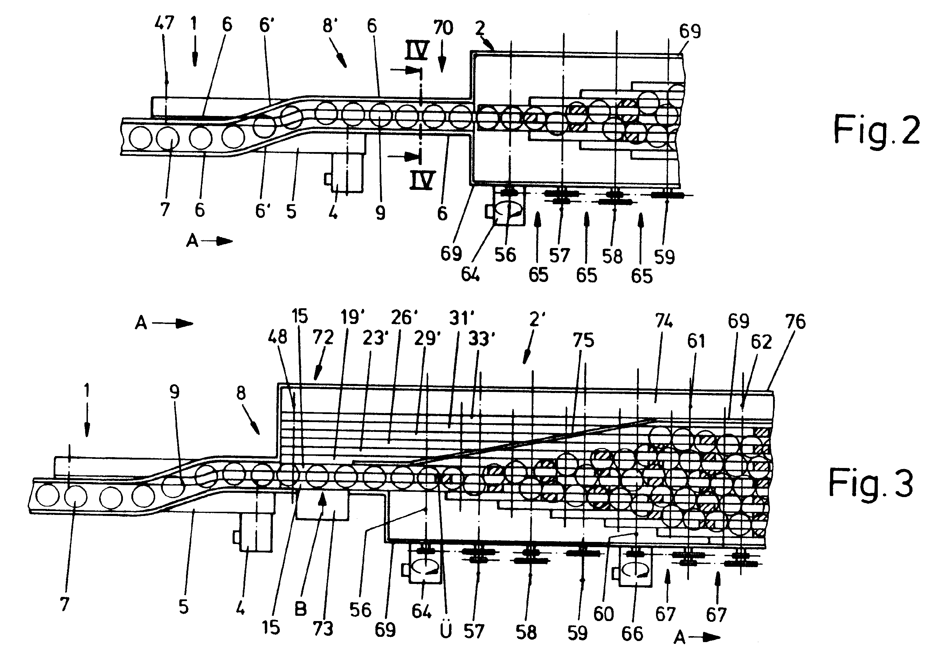

Die Fig. 2 zeigt eine Ausführung, die sich von der Ausführung nach Fig. 1 im wesentlichen nur dadurch unterscheidet, daß der dortige Anschlußbereich 8' zwischen dem Zuförderer 1 und dem Zwischenförderer 2 auf seinen durch den S-förmigen Abschnitt 6' der Führungsgeländer 6 bestimmten Teil in Transportrichtung A folgend einen geradlinig verlaufenden Transportabschnitt 70 aufweist, der nur von einer Teillänge des Transportbandes 9 und den beiden Führungsgeländern 6 gebildet ist. Das Transportband 9 ist in diesem Transportabschnitt 70 mit seiner jeweiligen oberen Länge in einer an der Oberseite einer Führungsleiste 71 vorgesehenen Führungsnut geführt ist. Die Führungsleiste 71, die mit ihrer Längserstreckung in Transportrichtung A liegt, besitzt entsprechend Fig. 7 einen in etwa trapezartigen Querschnitt in der Form, daß die Breite dieser Führungsleiste 71 von der Oberseite zur Unterseite hin abnimmt. Der Transportabschnitt 70 hat den Vorteil, daß nur aufrechtstehende Flaschen 7 vom Zuförderer 1 an den Zwischenförderer 2 gelangen können, da nur solche Flaschen 7 mit ihrem Boden 7' auf dem Transportband 9 aufstehend gleichzeitig auch an den beiden über dem Niveau des Transportbandes 9 liegenden Führungsgeländern 6 geführt sind. Beispielsweise umgefallene Flaschen 7 oder Flaschenscherben, die dann keine Führung durch die beiden Führungsgeländer 6 erfahren, fallen im Bereich des Transportabschnittes 70 von dem Transportband 9 und werden somit automatisch ausgeschleust. Zur Unterstützung dieses Effekts weist die obere Länge des Transportbandes 9 im Bereich des Transportabschnittes 70 vorzugsweise eine geringfügige Neigung gegenüber der senkrecht zur Transportrichtung A verlaufenden horizontalen Achsrichtung auf.

Die in der Fig. 3 dargestellte Ausführung unterscheidet sich von der Ausführung nach Fig. 1 im wesentlichen nur dadurch, daß am dortigen Zwischenförderer 2' auf den Anschlußbereich 8 bzw. auf den Eingang dieses Zwischenförderers 2' folgend und in Transportrichtung A vor dem eigentlichen Umformbereich, der etwa bei dem Übergang Ü zwischen den Transportbändern 9 und 10 des ersten Förderabschnittes beginnt, eine Zone bzw. ein Bereich 72 mit einer Ausstoßvorrichtung 73 vorgesehen ist, die z.B. zum Ausstoßen bzw. Ausschleusen von in der vorausgehenden Behandlungsstation nicht ordnungsgemäß behandelter Flaschen 7 (beispielsweise unterfüllter Flaschen, nicht ordnungsgemäß verschlossener Flaschen usw.) dient. Die Zone 72 wird bei dieser Ausführung nicht nur von dem Transportband 9 und den bis an den Eingang des Zwischenförderers 2' reichenden Transportbändern 15 der beiden zweiten Förderabschnitte gebildet, sondern auch von den bezogen auf die Transportrichtung A vorderen Transportbändern der auf einer Seite des Transportbandes 9 bzw. des zugehörigen ersten Förderabschnittes (bei der für die Fig. 3 gewählten Darstellung oberhalb dieses ersten Förderabschnitts) vorgesehenen dritten bis achten Förderabschnittes. Diese Transportbänder sind in der Fig. 3 mit 19', 23', 26', 29', 31' und 33' bezeichnet. Sie entsprechen in ihrer Funktion den Transportbändern 19, 23, 26, 29, 31 bzw. 33 und unterscheiden sich von letzteren lediglich dadurch, daß sie mit ihrem vorderen Ende ebenfalls bis an die dem Zuförderer 1 benachbarte Seite des Zwischenförderers 2' reichen. An das Transportband 33' schließt sich nach außen noch ein Transportband 74 an, welches zusammen mit einem äußeren Führungsgeländer 76 eine Förderstrecke zum Abführen der mit der Ausstoßvorrichtung 73 ausgestoßenen Flaschen 7 bildet und dessen, bezogen auf die Transportrichtung A vorderes Ende bzw. entsprechender Umlenkbereich ebenso wie die Umlenkbereiche der Transportbänder 15, 19', 23', 26', 29', 31' und 33' durch die Achse 48 bestimmt ist. Um sicherzustellen, daß mit der Ausstoßvorrichtung 73 ausgestoßene, d.h. von dieser Vorrichtung entsprechend dem Pfeil B senkrecht zur Transportrichtung A von den Transportbändern 9 und 15 auf die Transportbänder 19', 23', 26', 29', 31' und 33' bewegte und von diesen Transportbändern wegbewegte Flaschen 7 schließlich tatsächlich auf das Transportband 74 und nicht in den dem Abförderer 3 zugeführten Flaschenstrom gelangen können, ist bei dieser Ausführungsform noch ein Führungsgeländer 75 vorgesehen, das mit seinem einen Ende in der Zone 72 in Transportrichtung A nach dem Eingang des Zwischenförderers 2' und etwa an der dem einen Transportband 15 benachbarten Seite des Transportbandes 19' liegt und mit seinem anderen, in Transportrichtung A folgenden Ende in das in der Fig. 3 obere Führungsgeländer 69 übergeht. Dieses Führungsgeländer 75 dient ausschließlich dem vorbeschriebenen Ausschleußen und nicht dem Umformen des Flaschenstromes. Das vorbeschriebene Ausschleußen ist im Bereich des Zwischenförderers 2' auch nur dadurch möglich, daß das Umformen ohne die Notwendigkeit von Führungsgeländern erfolgt.

Die Erfindung wurde voranstehend an Ausführungsbeispielen beschrieben. Es versteht sich, daß Änderungen sowie Abwandlungen möglich sind, ohne daß dadurch der der Erfindung zugrundeliegende Gedanke verlassen wird. So ist es beispielsweise möglich, sämtliche Achsen 56 - 63 durch einen gemeinsamen Motor und entsprechende Untersetzungsgetriebe anzutreiben, wenngleich die Verwendung zweier Elektromotore 64 und 66 den Vorteil einer optimaleren Steuerung des Umformvorganges bietet.

Die die Förderabschnitte des Zwischenförderers bildenden und in einer gemeinsamen Transportrichtung umlaufenden bzw. eine gemeinsame Transportrichtung aufweisenden Transportelemente können bei der Erfindung auch jeweils aus einer Gruppe von Röllchen bestehen, die in jeder Gruppe in Transportrichtung aufeinander folgend vorgesehen und von Gruppe zu Gruppe um eine horizontale, senkrecht zur Transportrichtung liegende Achse mit unterschiedlicher Geschwindigkeit angetrieben sind. Eine mögliche Ausbildung dieser Ausführungsform der Erfindung bestünde bespielsweise darin, daß die Transportbänder der Zwischenförderer 2 oder 2′ jeweils durch wenigstens eine solche Gruppe von Röllchen ersetzt sind, wobei dann an den Übergängen Ü die dortigen Gleitbleche 44 entfallen könnten.

## Patentansprüche

1. Verfahren zum Umformen eines über einen Zuförderer angeförderten einspurigen Behälterstromes in einen abzufördernden mehrspurigen Behälterstrom, unter Verwendung eines Umformbereichs, welcher auf einem zwischen dem Zuförderer und dem Abförderer angeordneten sowie aus mehreren, eine gemeinsame Transportrichtung aufweisenden Transporteinrichtungen bestehenden Zwischenförderer gebildet ist und auf welchem bei sich zunehmend verbreiterndem Behälterstrom die Fördergeschwindigkeit der Behälter stufenförmig reduziert wird, dadurch gekennzeichnet, daß die Behälter über den Umformbereich in Transportrichtung der Transporteinrichtungen bewegt werden, und daß die Fördergeschwindigkeit der Behälter in dieser Transportrichtung stufenförmig reduziert wird.

2. Anordnung zum Umformen eines angeförderten einspurigen Behälterstroms in einen abzufördernden mehrspurigen Behälterstrom, mit einem Zuförderer für den angeförderten Behälterstrom, mit einem zum Abfördern des mehrspurigen Behälterstromes dienenden Abförderer, der eine im Vergleich zum Zuförderer verminderte Fördergeschwindigkeit aufweist, sowie mit einem zwischen dem Zuförderer und dem Abförderer angeordneten Zwischenförderer, der einen Umformbereich zum Umformen des einspurigen Behälterstromes in den mehrspurigen Behälterstrom bildet und mit einem Eingang auf den Zuförderer oder einen zwischen diesem und dem Zwischenförderer gebildeten Anschlußbereich folgt und an dessen Ausgang sich der Abförderer anschließt, wobei der Zwischenförderer mehrere Förderabschnitte aufweist, auf denen die Behälter mit ihrer Bodenfläche aufstehen und die von endlos umlaufend angetriebenen Transportbändern gebildet sind, welche bezogen auf ihre Umlauf- bzw. Transportrichtung ein vorderes, durch ihre jeweilige dortige Umlenkung bestimmtes Ende sowie ein hinteres, durch ihre jeweilige dortige Umlenkung bestimmtes Ende aufweisen, wobei die Förderabschnitte, von denen wenigstens ein erster Förderabschnitt den Eingang des Zwischenförderers bildet, mit dem vorderen und dem hinteren Ende ihrer Transportbänder in Transportrichtung dieser Transportbänder gegeneinander versetzt quer zur Transportrichtung seitlich aneinander anschließen, und wobei die Transportbänder der Förderabschnitte zur stufen förmigen Überbrückung der Differenz der Fördergeschwindigkeiten zwischen dem Zuförderer und dem Abförderer unterschiedliche Umlauf- bzw. Transportgeschwindigkeiten aufweisen, dadurch gekennzeichnet, daß sämtliche Förderabschnitte mit einem Transportband (13, 18, 22, 25, 28, 30, 32, 33, 33′) bis an den Ausgang (14) des Zwischenförderers (2, 2′) reichen, daß der erste Förderabschnitt sowie alle seitlich von diesem ersten Förderabschnitt vorgesehenen weiteren Förderabschnitte mit Ausnahme des bezogen auf den ersten Förderabschnitt jeweils am weitesten außen liegenden weiteren Förderabschnitts wenigstens zwei in Transportrichtung (A) über einen Übergang (Ü) aneinander anschließende Transportbänder (9-13; 15-18; 19-22; 23-25; 26-28; 29, 30; 31, 32; 19′ -22; 23′-25; 26′-28; 29′, 30; 31′, 32) aufweisen, daß zumindest im Umformbereich des Zwischenförderers (2, 2′) das jeweils auf einen Übergang (Ü) in Transportrichtung (A) folgende Transportband (z.B. 10-13) eines Förderabschnitts eine kleinere Transportgeschwindigkeit als das in Transportrichtung (A) diesem Übergang vorausgehende Transportband (z.B. 9-12) dieses Förderabschnitts aufweist, daß zumindest im Umformbereich des Zwischenförderers (2, 2′) jedem Übergang (Ü) eines Förderabschnitts ein diesem Übergang überlappendes Transportband eines seitlich an diesen einen Förderabschnitt anschließenden anderen Förderabschnittes benachbart ist, und daß die die Förderabschnitte des Zwischenförderers (2, 2′) bildenden Transportbänder senkrecht zur Transportrichtung (A) eine Breite aufweisen, die kleiner ist als der Durchmesser der Bodenfläche (7′) der Behälter (7).

3. Anordnung nach Anspruch 2, dadurch gekennzeichnet, daß die Transportgeschwindigkeit des einen Übergang (Ü) überlappenden Transportbandes des jeweils anderen Förderabschnittes kleiner ist als die Transportgeschwindigkeit des diesem Übergang (Ü) in Transportrichtung (A) vorausgehenden Transportbandes des jeweils einen Förderabschnittes.

4. Anordnung nach Anspruch 3, dadurch gekennzeichnet, daß die Transportgeschwindigkeit des einen Übergang (Ü) überlappenden Transportbandes des jeweils anderen Förderabschnittes großer ist als die Transportgeschwindigkeit des diesem Übergang (Ü) in Transportrichtung (A) folgenden Transportbandes des jeweiligen einen Förderabschnittes.

5. Anordnung nach einem der Ansprüche 2 bis 4, dadurch gekennzeichnet, daß beidseitig von dem ersten Förderabschnitt (9 - 13) mehrere weitere Förderabschnitte (15 - 18; 19 - 22; 23 - 25; 26 - 28; 29, 30; 31, 32; 33; 19' - 22; 23' - 25; 26' - 28; 29', 30; 31', 32; 33') vorgesehen sind.

6. Anordnung nach Anspruch 5, dadurch gekennzeichnet, daß die beidseitig von dem ersten Förderabschnitt (9 - 13) vorgesehenen weiteren Förderabschnitte in bezug auf ihre Transportbänder (15 - 18; 19 - 22; 23 - 25; 26 - 28; 29, 30; 31, 32; 33) spiegelsymmetrisch zu einer von der Transportrichtung (A) der Transportbänder (9 - 13) des ersten Förderabschnittes bestimmten Mittellinie des Zwischenförderers (2) angeordnet sind.

7. Anordnung nach einem der Ansprüche 2 bis 6, dadurch gekennzeichnet, daß die Übergänge (Ü) zwischen den Transportbändern der einzelnen Förderabschnitte jeweils von Förderabschnitt zu benachbartem Förderabschnitt in Transportrichtung (A) versetzt sind.

8. Anordnung nach einem der Ansprüche 2 bis 7, dadurch gekennzeichnet, daß die bis an den Ausgang (14) des Zwischenförderers (2, 2') reichenden Transportbänder (13, 18, 22, 25, 28, 30, 32, 33, 33') jeweils von Förderabschnitt zu Förderabschnitt in Transportrichtung (A) eine unterschiedliche Länge derart aufweisen, daß die vorderen Enden dieser Transportbänder in Transportrichtung (A) gegeneinander versetzt sind.

9. Anordnung nach einem der Ansprüche 2 bis 8, dadurch gekennzeichnet, daß die bezogen auf die Transportrichtung (A) vorderen und/oder hinteren Enden der Transportbänder (9 - 13; 15 - 18; 19 - 22; 23 - 25; 26 - 28; 29, 30; 31, 32; 33; 19'; 23'; 26'; 29'; 31'; 33') durch mehrere in Transportrichtung (A) aufeinander folgende, horizontale und senkrecht zu dieser Transportrichtung (A) verlaufende Achsen (48 - 55; 56 - 63) bestimmt sind.

10. Anordnung nach Anspruch 9, dadurch gekennzeichnet, daß die vorderen bzw. hinteren Enden der beidseitig von einem Übergangsbereich (Ü) eines Förderabschnitts vorgesehenen und diesen Übergangsbereich überlappenden Transportbänder jeweils von einer gemeinsamen Achse (48 - 55; 56 - 63) bestimmt sind.

11. Anordnung nach Anspruch 10, dadurch gekennzeichnet, daß die in Transportrichtung (A) hinteren Enden der bis an den Ausgang (14) des Zwischenförderers (2, 2') reichenden Transportbänder (13, 18, 22, 25, 28, 30, 32, 33, 33') durch eine für alle diese Transportbänder gemeinsame, horizontale und senkrecht zur Transportrichtung (A) verlaufende, vorzugsweise angetriebene Achse (63) bestimmt sind.

12. Anordnung nach einem der Ansprüche 9 bis 11, dadurch gekennzeichnet, daß die die hinteren Enden der Transportbänder bestimmenden Achsen (56 - 63) in der Weise, in der sie in Transportrichtung (A) aufeinander folgen, mit stufenförmig abnehmender Geschwindigkeit angetrieben sind, wobei die Differenz der Transportgeschwindigkeiten zwischen den von zwei aufeinander folgenden Achsen (56 - 63) angetriebenen Transportbändern vorzugsweise etwa 10 Meter/Min. beträgt.

13. Anordnung nach Anspruch 12, dadurch gekennzeichnet, daß die erwähnten Achsen (56 - 63) zwei in Transportrichtung (A) aufeinander folgende Gruppen von Achsen (56 - 59; 60 - 63) bilden, und daß für jede Gruppe dieser Achsen ein gesonderter, vorzugsweise in seiner Geschwindigkeit regelbarer Antriebsmotor (64, 66) vorgesehen ist.

14. Anordnung nach einem der Ansprüche 2 bis 13, dadurch gekennzeichnet, daß beidseitig des ersten Förderabschnittes (9 - 13) jeweils sieben weitere Förderabschnitte (15 - 18; 19 - 22; 23 - 25; 26 - 28; 29, 30; 31, 32; 33; 19' - 22; 23' - 25; 26' - 28; 29', 30; 31', 32; 33') vorgesehen sind.

15. Anordnung nach einem der Ansprüche 2 bis 14, dadurch gekennzeichnet, daß die die Förderabschnittes des Zwischenförderers (2, 2') bildenden Transportbänder eine Breite von etwa einem Drittel des Durchmessers der Bodenfläche (7') der Behälter (7) aufweisen.

16. Anordnung nach einem der Ansprüche 2 bis 15, dadurch gekennzeichnet, daß im Bereich des Eingangs des Zwischenförderers (2') eine Ausstoßvorrichtung (73) vorgesehen ist.

17. Anordnung nach einem der Ansprüche 2 bis 16, dadurch gekennzeichnet, daß im Anschlußbereich (8') zwischen dem Zuförderer (1) und dem Zwischenförderer (2) ein Transportabschnitt (70) zum Entfernen von Fremdkörpern, insbesondere zum Entfernen von Scherben, gebildet ist, und daß dieser Transportabschnitt (70) aus einem Transportband und zwei über diesem Transportband angeordneten seitlichen Führungsgeländern (6) besteht, wobei das Transportband (9) vorzugsweise seitlich geneigt und/oder eine im Vergleich zum Durchmesser und/oder Boden (7') der Behälter (7) verminderte Breite aufweist.

18. Anordnung nach einem der Ansprüche 1 bis 17, dadurch gekennzeichnet, daß an den Übergängen (Ü) jeweils wenigstens ein Gleitblech (44) vorgesehen ist.

19. Anordnung nach einem der Ansprüche 1 bis 18, dadurch gekennzeichnet, daß die den Zwischenförderer (2, 2') bildenden Transportbänder (9 - 13, 15 - 18, 19 - 22, 23 -25, 26 - 27, 29, 30, 31, 32, 33, 19', 23', 26', 29', 31', 33') mit ihren oberen Längen in Nuten (38) geführt sind, die an einer ebenen, horizontalen Oberseite wenigstens einer Platte (39) vorgesehen sind.

20. Anordnung zum Umformen eines angeförderten einspurigen Behälterstroms in einen abzufördernden mehrspurigen Behälterstrom , mit einem Zuförderer für den angeförderten Behälterstrom, mit einem zum Abfördern des mehrspurigen Behälterstromes dienenden Abförderer, der eine im Vergleich zum Zuförderer verminderte Fördergeschwindigkeit aufweist, sowie mit einem zwischen dem Zuförderer und dem Abförderer angeordneten Zwischenförderer, der einen Umformbereich zum Umformen des einspurigen Behälterstroms in den mehrspurigen Behälterstrom bildet, wobei der Zwischenförderer von mehreren Transportelementen gebildet ist, auf denen die Behälter mit ihrer Bodenfläche aufstehen und die zur stufenförmigen Überbrückung der Differenz der Fördergeschwindigkeiten zwischen Zuförderer und Abförderer in einer gemeinsamen Transportrichtung unterschiedliche Transportgeschwindigkeiten aufweisen, dadurch gekennzeichnet, daß die Transportelemente jeweils von wenigstens einer Gruppe von Röllchen gebildet sind, die in jeder Gruppe in Transportrichtung aufeinander folgend angeordnet und von Gruppe zu Gruppe mit unterschiedlicher Geschwindigkeit derart angetrieben sind, daß die Behälter über den Umformbereich in Transportrichtung der Transportelemente bewegt werden und die Fördergeschwindigkeit der Behälter in dieser Transportrichtung stufenförmig reduziert wird.

**Claims**

1. Method for transforming a single-track container stream conveyed inwardly by an inward conveyor into a multi-track container stream to be conveyed away, with the use of a transformation region, which is formed on an intermediate conveyor, which is arranged between the inward conveyor and the outward conveyor as well as consists of several transport equipments displaying a common transport direction, and on which the conveying speed of the containers is reduced in steps while the container stream broadens increasingly, characterised thereby, that the containers are moved over the transformation region in the transport direction of the transport equipments and that the conveying speed of the containers in this transport direction is reduced in steps.

2. Arrangement for transforming an inwardly conveyed single-track container stream into a multi-track container stream to be conveyed away, with an inward conveyor for the inwardly conveyed container stream, with an outward conveyor which serves for conveying the multi-track container stream away and displays a conveying speed which is reduced by comparison with the inward conveyor as well as with an intermediate conveyor, which is arranged between the inward conveyor and the outward conveyor, forms a transformation region for transforming the single-track container stream into the multi-track container stream and by an entry follows either the inward conveyor or a connecting region formed between this and the intermediate conveyor and the exit of which is adjoined by the outward conveyor, wherein the intermediate conveyor displays several conveying portions, on which the containers stand by their base surfaces and which are formed by endless transport belts which are driven to circulate and with reference to their direction of circulation or transport display a front end determined by its respective deflection there as well as a rear end determined by its respective deflection there, wherein the conveying portions, of which at least a first conveying portion forms the entry of the intermediate conveyor, adjoin one to the other laterally with the front and the rear end of their transport belts in transport direction of these transport belts displaced one relative to the other transversely to the transport direction and wherein the transport belts of the conveying portions display different speeds of circulation or transport for the stepped bridging of the difference of the conveying speeds between the inward conveyor and the outward conveyor, characterised thereby, that all conveying portions reach by one transport belt (13, 18, 22, 25, 28, 30, 32, 33, 33') to the exit (14) of the intermediate conveyor (2, 2'), that the first conveying portion as well as all further conveying portions, which are provided laterally of this first conveying portion with the exception of the further conveying portion respectively lying furthest outwards with respect to the first conveying portion, display at least two transport belts (9 to 13; 15 to 18; 19 to 22; 23 to 25; 26 to 28; 29, 30; 31, 32; 19′ to 22; 23′ to 25; 26′ to 28; 29′, 30; 31′, 32), which adjoin one the other in transport direction (A) by way of a transition (Ü), that that transport belt (for example 10 to 13) of a conveyor portion, which at least in the transformation region of the intermediate conveyor (2, 2′) respectively follows a transition (Ü) in the transport direction (A), displays a lower transport speed than that transport belt (for example 9 to 12) of this conveyor portion, which precedes this transition in the transport direction (A), that each transition (Ü) of a conveying portion is - at least in the transformation region of the intermediate conveyor (2, 2′) - adjoined by a transport belt, which overlaps this transition, of another conveying portion laterally adjoining this one conveying portion, and that the transport belts forming the conveying portions of the intermediate conveyor (2, 2′) perpendicularly to the transport direction (A) display a width which is smaller than the diameter of the base surface (7′) of the containers (7).

3. Arrangement according to claim 2, characterised thereby, that the transport speed of the transport belt, which overlaps a transition (Ü), of the respective other conveying portion is smaller than the transport speed of the transport belt, which precedes this transition (Ü) in the transport direction (A), of the respective one conveying portion.

4. Arrangement according to claim 3, characterised thereby, that the transport speed of the transport belt, which overlaps a transition (Ü), of the respective other conveying portion is greater than the transport speed of the transport belt, which follows this transition (Ü) in the transport direction (A), of the respective one conveying portion.

5. Arrangement according to one of the claims 2 to 4, characterised thereby, that several further conveying portions (15 to 18; 19 to 22; 23 to 25; 26 to 28; 29, 30; 31, 32; 33; 19′ to 22; 23′ to 25; 26′ to 28; 29′, 30; 31′, 32; 33′) are provided at both sides of the first conveying portion (9 to 13).

6. Arrangement according to claim 5, characterised thereby, that the further conveying portions, which are provided at both sides of the first conveying portion (9 to 13), are in respect of their transport belts (15 to 18; 19 to 22; 23 to 25; 26 to 28; 29, 30; 31, 32; 33) arranged in mirror symmetry to a centre line, which is determined by the transport direction (A) of the transport belts (9 to 13) of the first conveying portion, of the intermediate conveyor (2).

7. Arrangement according to one of the claims 2 to 6, characterised thereby, that the transitions (Ü) between the transport belts of the individual conveying portions are displaced in the transport direction (A) each time from one conveying portion to the adjacent conveying portion.

8. Arrangement according to one of the claims 2 to 7, characterised thereby, that the transport belts (13, 18, 22, 25, 28, 30, 32, 33, 33′), which reach to the exit (14) of the intermediate conveyor (2, 2′), each display a length which differs in the transport direction (A) each time from conveying portion to conveying portion in such a manner that the front ends of these transport belts are displaced one relative to the other in the transport direct(on (A).

9. Arrangement according to one of the claims 2 to 8, characterised thereby, that those ends of the transport belts (9 to 13; 15 to 18; 19 to 22; 23 to 25; 26 to 28; 29, 30; 31, 32; 19′, 23′, 26′; 29′; 31′, 33′), which are to the front and/or rear with reference to the transport direction (A) are determined by several axles (48 to 55; 56 to 63), which follow one upon the other in the transport direction (A) and extend horizontally and vertically to this transport direction (A).

10. Arrangement according to claim 9, characterised thereby, that the front or rear ends of the transport belts, which are provided at both sides of a transition region (Ü) of a conveying portion and overlap this transition region, are determined each time by a common axle (48 to 55; 56 to 63).

11. Arrangement according to claim 11, characterised thereby, that those ends of the transport belts (13, 18, 22, 25, 28, 30, 32, 33, 33′), which reach to the exit (14) of the intermediate conveyor (2, 2′), which are to the rear in the transport direction (A), are determined by a preferably driven axle (63), which is common for all these transport belts and extends horizontally and vertically to the transport direction (A).

12. Arrangement according to one of the claims 9 to 11, characterised thereby, that the axles (56 to 63) determining the rear ends of the transport belts are driven at a speed reducing in steps in the manner in which they follow one upon the other in the transport direction (A), wherein the difference of the transport speeds between the transport belts, which are driven by two successive axles (56 to 63), preferably amounts to about 10 metres per minute.

13. Arrangement according to claim 12, characterised thereby, that the mentioned axles (56 to 63) form two groups, which follow one upon the other in the transport direction (A), of axles (56 to 59; 60 to 63) and that a separate drive motor (64, 66), which is preferably regulable in its speed, is provided for each group of these axles.

14. Arrangement according to one of the claims 2 to 13, characterised thereby, that seven further conveying portions (15 to 18; 19 to 22; 23 to 25; 26 to 28; 29, 30; 31, 32; 33; 19′ to 22; 23′ to 25; 26′ to 28; 29′, 30; 31′, 32; 33′ each are provided at both sides of the first conveying portion (9 to 13).

15. Arrangement according to one of the claims 2 to 14, characterised thereby, that the transport belts forming the conveying portions of the intermediate conveyor (2, 2′) display a width of about one third of the diameter of the base surface (7′) of the containers (7).

16. Arrangement according to one of the claims 2 to 15, characterised thereby, that an ejector device (73) is provided in the region of the entry of the intermediate conveyor (2′).

17. Arrangement according to one of the claims 2 to 16, characterised thereby, that a transport portion (70) for the removal of foreign bodies, in particular for the removal of fragments, is formed in the connecting region (8′) between the inward conveyor (1) and the intermediate conveyor (2) and that this transport portion (70) consists of a transport belt and two lateral guide rails (6) arranged above this transport belt, wherein the transport belt (9) is preferably inclined laterally and/or displays a width reduced in comparison with the diameter and/or base (7′) of the containers (7).

18. Arrangement according to one of the claims 2 to 17, characterised thereby, that at least one metal slide plate (44) is respectively provided at each of the transitions (Ü).

19. Arrangement according to one of the claims 2 to 18, characterised thereby, that the transport belts (9 to 13, 15 to 18, 19 to 22, 23 to 25, 26 to 27, 29, 30, 31, 32, 33, 19′, 23′, 26′, 29′, 31′, 33′) forming the intermediate conveyor (2, 2′) are guided by their runs in grooves (38), which are provided at a planar horizontal upper side of at least one plate (39).

20. Arrangement for transforming an inwardly conveyed single-track container stream into a multi-track container stream to be conveyed away, with an inward conveyor for the inwardly conveyed container stream, with an outward conveyor which serves for conveying the multi-track container stream away and displays a conveying speed which is reduced by comparison with the inward conveyor as well as with an intermediate conveyor, which is arranged between the inward conveyor and the outward conveyor and forms a transformation region for transforming the single-track container stream into the multi-track container stream, wherein the intermediate conveyor is formed by several transport elements, on which the containers stand by their base surfaces and which display different transport speeds in a common transport direction for the stepped bridging of the difference of the conveying speeds between the inward conveyor and the outward conveyor, characterised thereby, that the transport elements are formed each time by at least one group of rollers which are arranged following one upon the other in the transport direction in each group and driven at a speed differing from group to group in such a manner that the containers are moved over the transformation region in the transport direction of the transport elements and that the conveying speed of the containers in this transport direction is reduced in steps.

**Revendications**

1. Procédé pour transformer un flux de récipients amené sur une seule file par un convoyeur d'alimentation en un flux de récipients à évacuer sur plusieurs files, avec utilisation d'une zone de transformation formée sur un convoyeur intermédiaire placé entre le convoyeur d'alimentation et le convoyeur d'évacuation et composé de plusieurs dispositifs de transport présentant un sens de transport commun, et sur laquelle la vitesse d'acheminement des récipients est réduite de façon échelonnée pendant que le flux de récipients s'élargit de plus en plus, caractérisé en ce que les récipients sont déplacés dans le sens de transport des dispositifs de transport dans la zone de transformation et que la vitesse d'acheminement des récipients est réduite de façon échelonnée dans ce sens de transport.

2. Installation pour transformer un flux de récipients amené sur une seule file en un flux de récipients à évacuer sur plusieurs files, comprenant un convoyeur d'alimentation pour le flux de récipients amené, un convoyeur d'évacuation servant à évacuer le flux de récipients sur plusieurs files et ayant une vitesse d'acheminement réduite par rapport au convoyeur d'alimentation, ainsi qu'un convoyeur intermédiaire placé entre le convoyeur d'alimentation et le convoyeur d'évacuation et formant une zone de transformation pour transformer le flux de récipients sur une seule file en flux de récipients sur plusieurs files, convoyeur intermédiaire dont l'entrée suit le convoyeur d'alimentation ou une zone de raccordement formée entre celui-ci et le convoyeur intermédiaire, et à la sortie duquel se raccorde le convoyeur d'évacuation, le convoyeur intermédiaire comportant plusieurs segments d'acheminement, sur lesquels les récipients sont disposés debout par leur surface de fond et qui sont formés par des bandes transporteuses entraînées pour circuler en continu, bandes qui possèdent une extrémité avant ou extrémité amont, par rapport à leur sens de circulation ou de transport, qui est déterminée par leur renvoi respectif à cet endroit, ainsi qu'une extrémité arrière ou extrémité aval déterminée par leur renvoi respectif à l'endroit considéré, les segments d'acheminement, dont au moins un premier segment forme l'entrée du convoyeur intermédiaire, étant mutuellement décalés par l'extrémité amont et l'extrémité aval de leurs bandes transporteuses, dans le sens de transport de ces bandes, et se raccordant latéralement les uns aux autres, transversalement au sens de transport, et les bandes transporteuses des segments d'acheminement présentant des vitesses de circulation ou de transport différentes en vue du recouvrement échelonné de la différence entre les vitesses d'acheminement du convoyeur d'alimentation et du convoyeur d'évacuation, caractérisée en ce que tous les segments d'acheminement s'étendent par une bande transporteuse (13, 18, 22, 25, 28, 30, 32, 33, 33') jusqu'à la sortie (14) du convoyeur intermédiaire (2, 2'), que le premier segment d'acheminement, de même que tous les segments d'acheminement supplémentaires prévus à côté de ce premier segment, à l'exception du segment supplémentaire situé chaque fois le plus à l'extérieur par rapport au premier segment, comportent au moins deux bandes transporteuses (9-13; 15-18; 19-22; 23-25; 26-28; 29, 30, 32; 19'-22; 23'-25; 26'-28; 29', 30; 31', 32) qui se raccordent l'une à l'autre dans le sens de transport (A) par une jonction (Ü), que, tout au moins dans la zone de transformation du convoyeur intermédiaire (2, 2'), la bande transporteuse (par exemple 10-13) faisant suite à une jonction (Ü) dans le sens de transport (A) d'un segment d'acheminement, présente une plus petite vitesse de transport que la bande transporteuse (par exemple 9-12) précédant cette jonction dans le sens de transport (A) de ce même segment d'acheminement, que, tout au moins dans la zone de transformation du convoyeur intermédiaire (2, 2'), chaque jonction (Ü) d'un segment d'acheminement est voisine d'une bande transporteuse recouvrant cette jonction et faisant partie d'un autre segment d'acheminement se raccordant latéralement au segment d'acheminement précité, et que les bandes transporteuses, formant les segments d'acheminement du convoyeur intermédiaire (2, 2'), possèdent une largeur, perpendiculairement au sens de transport (A), qui est plus petite que le diamètre de la surface de fond (7') des récipients (7).

3. Installation selon la revendication 2, caractérisée en ce que la vitesse de transport de la bande transporteuse, recouvrant une jonction (Ü) de l'autre segment d'acheminement respectif, est plus petite que la vitesse de transport de la bande transporteuse précédant cette jonction (Ü) du segment d'acheminement concerné.

4. Installation selon la revendication 3, caractérisée en ce que la vitesse de transport de la bande transporteuse, recouvrant une jonction (Ü) de l'autre segment d'acheminement respectif, est plus grande que la vitesse de transport de la bande transporteuse qui suit cette jonction (Ü) dans le sens de transport (A) du segment d'acheminement concerné.

5. Installation selon une des revendications 2 à 4, caractérisée en ce que plusieurs segments d'acheminement supplémentaires (15 - 18; 19 - 22; 23 - 25; 26- 28; 29, 30; 31, 32; 33; 19' - 22; 23' - 25; 26' - 28; 29', 30; 31', 32; 33') sont prévus des deux côtés du premier segment d'acheminement (9 - 13).

6. Installation selon la revendication 5, caractérisée en ce que les segments d'acheminement supplémentaires prévus des deux côtés du premier segment d'acheminement (9 - 13), sont disposés, pour ce qui concerne leurs bandes transporteuses (15 - 18; 19 - 22; 23 - 25; 26 - 28; 29, 30; 31, 32; 33), symétriquement de part et d'autre d'une ligne médiane du convoyeur intermédiaire (2), ligne médiane qui est déterminée par le sens de transport (A) des bandes transporteuses (9 - 13) du premier segment d'acheminement.

7. Installation selon une des revendications 2 à 6, caractérisée en ce que les jonctions (Ü) entre les bandes transporteuses des différents segments d'acheminement, sont décalées chaque fois, dans le sens de transport (A), d'un segment d'acheminement au segment d'acheminement voisin.

8. Installation selon une des revendications 2 à 7, caractérisée en ce que les bandes transporteuses (13, 18, 22, 25, 28, 30, 32, 33, 33′) s'étendent jusqu'à la sortie (14) du convoyeur intermédiaire (2, 2′), possèdent des longueurs différentes, dans le sens de transport (A), d'un segment d'acheminement à l'autre, de telle sorte que les extrémités amont de ces bandes transporteuses sont mutuellement décalées dans le sens de transport (A).

9. Installation selon une des revendications 2 à 8, caractérisée en ce que les extrémités amont et/ou les extrémités aval des bandes transporteuses (9 - 13; 15 - 18; 19 - 22; 23 - 25; 26 - 28; 29, 30; 31, 32; 33; 19′; 23′; 26′; 29′; 31′, 33′), par rapport au sens de transport (A), sont déterminées par plusieurs axes horizontaux (48 - 55; 56 - 63) qui se suivent dans le sens de transport (A) et sont orientées perpendiculairement à ce sens de transport (A).

10. Installation selon la revendication 9, caractérisée en ce que les extrémités amont et les extrémités aval des bandes transporteuses prévues des deux côtés d'une zone de jonction (Ü) d'un segment d'acheminement et recouvrant cette zone de jonction, sont déterminées chaque fois par un axe commun (48 - 55; 56 - 63).

11. Installation selon la revendication 10, caractérisée en ce que les extrémités aval, dans le sens de transport (A), des bandes transporteuses (13, 18, 22, 25, 28, 30, 32, 33, 33′) s'étendant jusqu'à la sortie (14) du convoyeur intermédiaire (2, 2′), sont déterminées par un axe horizontal (63) commun à toutes ces bandes transporteuses et orienté perpendiculairement au sens de transport (A), axe qui est de préférence commandé.

12. Installation selon une des revendications 9 à 11, caractérisée en ce que les axes (55 - 63) déterminant les extrémités aval des bandes transporteuses, sont entraînés à des vitesses qui diminuent de façon échelonnée dans l'ordre où ces axes se suivent dans le sens de transport (A), la différence des vitesses de transport entre les bandes transporteuses entraînées par deux axes (58 - 63) successifs étant de préférence d'environ 10 mètres/min.

13. Installation selon la revendication 12, caractérisée en ce que les axes (58 - 63) mentionnés forment deux groupes d'axes (56 - 59; 60 - 63) qui se suivent dans le sens de transport (A) et qu'un moteur d'entraînement (64, 66) particulier, de préférence à vitesse réglable, est prévu pour chacun de ces groupes.

14. Installation selon une des revendication 2 à 13, caractérisée en ce que sept segments d'acheminement supplémentaires (15 - 18; 19 - 22; 23 - 25; 26 - 28; 29, 30; 31, 32; 33; 19′ - 22; 23′ - 25; 26′ - 28; 29′, 30; 31′, 32; 33′), sont prévus sur chacun des deux côtés du premier segment d'acheminement (9 - 13).

15. Installation selon une des revendications 2 à 14, caractérisée en ce que les bandes transporteuses formant les segments d'acheminement du convoyeur intermédiaire (2, 2′), possèdent une largeur correspondant à peu près à un tiers du diamètre de la surface de fond (7′) des récipients (7).

16. Installation selon une des revendications 2 à 15, caractérisée en ce qu'un dispositif d'éjection (73) est prévu dans la région de l'entrée du convoyeur intermédiaire (2′).

17. Installation selon une des revendications 2 à 16, caractérisée en ce qu'un tronçon de transport (70) pour enlever des corps étrangers, en particulier pour enlever des fragments, est formé dans la zone de raccordement (8′) entre le convoyeur d'alimentation (1) et le convoyeur intermédiaire (2), et en ce que ce tronçon de transport (70) est constitué d'une bande transporteuse et de deux barrières latérales de guidage (6) disposées au-dessus de cette bande transporteuse (9), laquelle est de préférence inclinée vers le côté et/ou est pourvue d'une largeur réduite comparativement au diamètre et/ou au fond (7′) des récipients (7).

18. Installation selon une des revendications 1 à 17, caractérisée en ce qu'au moins une tôle de glissement (44) est prévue à chacune des jonctions (Ü).

19. Installation selon une des revendications 1 à 18, caractérisée en ce que les bandes transporteuses (9 - 13; 15 - 18; 19 - 22; 23 - 25; 26 - 27; 29, 30, 31, 32; 33; 19′, 23′, 26′, 29′, 31′, 33′), formant le convoyeur intermédiaire (2, 2′), sont guidées par leurs brins supérieurs dans des rainures (38) prévues sur le côté supérieur horizontal et plan d'au moins une plaque (39).

20. Installation pour transformer un flux de récipients amené sur une seule file en un flux de récipients à évacuer sur plusieurs files, comprenant un convoyeur d'alimentation pour le flux de récipients amené, un convoyeur d'évacuation servant à évacuer le flux de récipients sur plusieurs files et ayant une vitesse d'acheminement réduite par rapport au convoyeur d'alimentation, ainsi qu'un convoyeur intermédiaire placé entre le convoyeur d'alimentation et le convoyeur d'évacuation et formant une zone de transformation pour transformer le flux de récipients sur une seule file en flux de récipients sur plusieurs files, le convoyeur intermédiaire étant constitué de plusieurs éléments de transport, sur lesquels les récipients sont disposés debout par leur surface de fond et qui présentent des vitesses de transport différentes dans un sens de transport commun en vue du recouvrement échelonné de la différence des vitesses d'acheminement entre le convoyeur d'alimentation et le convoyeur d'évacuation, caractérisée en ce que les éléments de transport sont formés chacun d'au moins un groupe de roulettes disposées les unes à la suite des autres dans le sens de transport dans chaque groupe et sont entraînées à des vitesses différentes d'un groupe à l'autre, de manière que les récipients soient déplacés dans la zone de transformation dans le sens de transport des éléments de transport et que la vitesse d'acheminement des récipients dans ce sens de transport soit réduite de façon échelonnée.

Fig.1

EP 0 352 517 B1

Fig.2

Fig.3

EP 0 352 517 B1

Fig.6

Fig.7

Fig.4

Fig.5

EP 0 352 517 B1